# EUROPEAN PATENT APPLICATION

(11) **EP 0 802 401 A1**
(43) Date of publication of application: **22.10.1997**
(21) Application number: 96935514.8
(22) Date of filing: 31.10.1996
(51) Int. Cl.: G01J 5/08

(54) **TEMPERATURE MEASUREMENT METHOD, TEMPERATURE CONTROL METHOD AND TEMPERATURE MEASUREMENT APPARATUS FOR HIGH-TEMPERATURE MELT**

(30) Priority: 02.11.1995 JP 309894/95; 13.03.1996 JP 55876/96; 19.04.1996 JP 97845/96
(71) Applicant: MITSUBISHI MATERIALS CORPORATION, Chiyoda-ku, Tokyo 100 (JP)
(72) Inventor: OKABE, Susumu Mitsubishi Materials Corporation, Omiya-shi Saitama 330 (JP); OGINO, Fumihiko Mitsubishi Materials Corporation, Omiya-shi Saitama 330 (JP); SATO, Hideya Mitsubishi Materials Corporation, Omiya-shi Saitama 330 (JP); HASEGAWA, Nozomu Mitsubishi Materials Corporation, Kagawa-gun Kagawa 761-31 (JP); FUNAMIZU, Takashi, Tokyo 100 (JP); YAMADA, Yoshirou, Tokyo 100 (JP)
(74) Representative: Füchsle, Klaus, Dipl.-Ing.
(86) International application number: JP9603197
(87) International publication number: WO9716709

(57) **Abstract**

A method of measuring the temperature of a hot melt by converting into temperature a light signal transmitted through an optical fiber the leading end of which is inserted into the hot melt. The temperature measurement is cyclically executed while severing by cutting any devitrified leading end portion of the optical fiber. Peak values of measured temperature, attributable to burning of components of the optical fiber, are excluded from the results of the measurement. The temperature of the hot melt is controlled based on the measured temperature as close as possible to a lower limit temperature which when not exceeded causes a reduction in fluidity of slag on the hot melt. The temperature measurement is performed by a temperature measuring apparatus which has a device for feeding the optical fiber into and out of the hot melt and a cutting device for severing the devitrified leading end portion of the optical fiber.

## Description

### Technical Field

The present invention relates to a temperature measuring method which enables easy and accurate measurement of a hot melt such as a molten metal in a furnace used in, for example, a metal refining process, and also to a temperature controlling method using the temperature measuring method, as well as to a temperature measuring apparatus for use in these methods.

### Background Art

Measurement of temperature of molten metals has been conventionally conducted by using thermo-couples. For instance, consumable thermo-couples which are to be directly dipped in hot metal melt, as well as thermo-couples sheathed in protective ceramics sheathes, are known. The consumable thermo-couple, however, renders the measuring operation laborious because of necessity of renewal of sensor probes upon each measurement, and inevitably raises the costs due to disposal. Sheathed thermo-couple also suffers a problem in regard to resistance to corrosion and thermal shock. In fact, this type of thermo-couple can stand only a limited time of use, say from 5 to 20 hours.

Besides the temperature measuring method relying upon thermo-couples, a method has been practiced which employs optical fibers. In this method, the sensing end of an optical fiber is received in a protective ceramics sheath, and the end of the sheath is immersed in a hot metal melt, so that heat radiated from the immersed portion is transmitted in the form of a light signal to a radiation pyrometer, whereby the temperature of the hot metal melt is measured. This type of measuring method is disclosed in, for example, Japanese Patent Laid-Open Nos. 4-348236 and 4-329323. This method, however, often poses a problem in that the measuring accuracy is impaired due to contamination of the inserted end of the optical fiber. Countermeasures have been taken to overcome this problem, such as supply of a cleaning gas around the end of the optical fiber, as proposed in, for example, Japanese Patent Laid-Open No. 60-231126. This countermeasure is unsatisfactory because the supplied cleaning gas undesirably serves to lower the temperature of the end of the immersed sheath.

A method has also been used in which the end of an optical fiber is immersed in a hot metal melt, so that the light radiated from the melt is directly detected to enable temperature measurement, as disclosed in, for example, Japanese Patent Laid-Open No. 62-19729. This method can be used appreciably well when applied to hot melt of a temperature reaching 1500 °C or higher as in the case of a steel making furnace, because in such a case the end of quartz fiber immersed in the hot melt dissolves so that the hot melt is always contacted by fresh end surface of the fiber, so as to enable continuous measurement of the temperature. However, when applied to a metal melt of a temperature around 1200 °C as in the case of a copper making furnace, this type of measuring method cannot afford continuous measurement because the fiber does not dissolve but gradually lose its transparency and, in addition, cannot provide accurate measuring results due to presence of large measurement error.

An object of the present invention is to provide a temperature measuring method, as well as a temperature measuring apparatus, which is improved to overcome the problem encountered by the known method which relies upon direct insertion and consumption of optical fiber.

It is also an object of the present invention to provide a method of controlling the temperature of a melt by using the temperature measuring method.

Certain types of melting furnaces used in metal smelting processes allow slag to appear on the surface of the metal melt. In such melting furnaces, a too low temperature of the metal melt lowers the slag temperature and, hence, allows precipitation of magnetite which serves to progressively reduce the fluidity of the slag. The reduced fluidity of slag hampers movement of the slag resulting in, for example, blocking of a discharge port of a furnace or a trough interconnecting furnaces in continuous copper making plant, thus seriously affecting the operation of the whole plant. More specifically, in continuous copper making process using a copper making furnace, iron contained in the matte is oxidized to form, in combination with the lime added as a flux, a calcium-ferrite slag of CaO-FeOₙ-Cu₂O type. This slag exhibits high fluidity even at relatively low temperatures but precipitation of magnetite starts to occur when the melt temperature has come down below 1200 °C. A further reduction in the melt temperature increases the amount of precipitate of magnetite, resulting in a corresponding increase in the slag viscosity, i.e., decrease in the slag fluidity.

Reduction of the slag fluidity would be avoidable if the melt temperature is maintained slightly above 1200 °C at which the magnetite precipitation becomes noticeable. In actual operation, however, variation of the melt temperature is inevitable and the amplitude of the variation cannot be controlled within a small range when the melt temperature is not accurately measured. Practically, therefore, operation is performed under such a control that the melt temperature varies around a comparatively high level so that it does never falls below the lower limit of 1200 °C.

More specifically, in the conventional method using a consumable thermo-couple, the temperature measurement cannot be executed continuously but intermittently at an interval of 40 to 60 minutes, so that the command melt temperature is set to a comparatively high level of 1230 °C, considering the amplitude of the temperature variation. Thus, the melt temperature is practically controlled with the command temperature set to a level which is more than 30 °C higher than the target lower temperature of 1200 °C. This conventional temperature control requires the temperature in the furnace to be maintained at temperatures higher than that actually required, resulting in heavy consumption of refractory lining of the furnace and consequent shortening of the service of the furnace. In addition, feed rate of copper scraps and gold/silver sludges, which are charged as coolants, is undesirably reduced.

In general, wear of furnace refractories due to the interaction with high temperature metal melt is unavoidable, and the rate of wear is greater when the temperature in the furnace is higher. By way of example, a reference is made here to relationship between slag temperature and the rate of dissolution of magnesia as reported in IRON AND STEEL 67 (1981)pp 1726. According to the report, a cylindrical sample piece of sintered magnesia was immersed in a ferrite slag and the rate of dissolution of the sintered magnesia in terms of reduction in the diameter was measured in relation to slag temperature, proving that the rate of diameter reduction is largely affected by the slag temperature, i.e., that the rate of dissolution at slag temperature of 1375 °C is about 1.7 times as large that observed at slag temperature of 1350 °C, thus demonstrating a drastic increase in the dissolution rate even with a small temperature rise of 25 °C.

As will be understood from the foregoing, a too high melt temperature shortens the life of refractories, while a too low slag temperature causes iron in the slag to precipitate in the form of magnetite, leading to a reduction in the slag fluidity so as to hamper efficient operation of the plant.

The above-described problem encountered in the conventional melt temperature control technique can be overcome by using the temperature measuring method of the present invention. Namely, the method of the present invention makes it possible to execute such a control that the melt temperature is maintained within a range which is lower than that in the conventional method and which is as low as possible but high enough to suppress precipitation of magnetite, thus retarding dissolution of the furnace refractories to prolong the life of the furnace and increasing the feed rate of scrap copper and gold/silver sludges charged as coolants, while maintaining high slag fluidity so as to ensure smooth and efficient operation of the plant.

Referring now to the apparatus for measuring the melt temperature used in the described temperature measuring method, the present invention provides an optical temperature measuring apparatus which, even when mounted through a tuyere for the purpose of measurement of the melt temperature inside a furnace, performs the temperature measurement with high accuracy without causing problem such as blocking of the tuyere.

A temperature detecting apparatus of the type disclosed in Japanese Patent Laid-Open No. 61-288028 has been known as an instrument for measuring temperature inside a furnace through a tuyere of the furnace. This temperature detecting apparatus has a guide tube to be inserted into a tuyere, a radiation pyrometer attached to the rear end of the guide tube through an assisting tube, a transparent plate immediately facing the light incident side of the radiation pyrometer, a mounting portion radially extending from the outer surface of the guide tube, and a handle. In use, the temperature detecting apparatus is fixed to the furnace with the guide tube received in the tuyere, so that the light radiated from the content of the furnace is detected by the radiation pyrometer through the guide tube and the transparent plate.

This apparatus has a basic structure common to a concentrate injection apparatus which employs a concentrate injection tube in place of the radiation pyrometer of the temperature detecting apparatus and, hence, can advantageously be used alternately with the fine ore injection apparatus. This temperature detecting apparatus, however, tends to cause an error in the temperature detection due to dust in the guide tube or contamination of the transparent plate, since the temperature is measured through the guide tube and past the transparent plate. In addition, accurate temperature measurement is also hampered due to the fact that the light rays radiated from the melt vary due to a fluctuation of the rate of radiation from the melt caused by change in the furnace gas composition, waving of the melt surface, presence of matters floating on the melt surface and gradual change in emissivity of the melt in progress of oxidation. Furthermore, since the apparatus has to be fixed to each tuyere at its mounting portion, a laborious work is required for realizing continuous measurement at a number of tuyeres.

Known also is a temperature measuring apparatus which makes use of a periscope, as disclosed in Japanese Patent Laid-Open No. 60-231126. This apparatus has a periscope adapted to be inserted into a tuyere, an optical cable connected to the periscope and a photo-detecting circuit connected to the optical cable. Heat radiation from the melt is observed by the periscope through the tuyere and is converted into temperature by the photo-detecting circuit, thus enabling measurement of the melt temperature. Thus, the melt temperature is measured from a remote place through a tuyere also in this case, so that accuracy of measurement is impaired by a fluctuation of the radiation rate from the melt, attributable to a change in the furnace gas, waving and foaming of the melt surface, presence of floating matter and emissivity change in progress of oxidation. In addition, this known apparatus requires a significant modification of the tuyere structure, because the periscope is inserted into a hole which is different from the tuyere punching hole. Consequently, the design and structure of this type of temperature measuring apparatus have to be determined with a sense of compromise with the installation of a punching rod which is inserted for the purpose of preventing blockage of the tuyere.

Besides the described indirect measuring methods which rely upon measurement of radiated light rays from a remote place, methods are also known which directly measure temperatures by using optical fibers the ends of which are immersed in the metal melts so as to enable direct measurement of the light rays emanating from the metal melt as disclosed, for example, in Japanese Patent Laid-Open No. 62-19729. This type of method is free from the influence of change in the furnace gas and waving of the melt surface and change in emissivity, but requires suitable measure for preventing blocking of tuyere into which the optical fiber is to be inserted. Practical problems are imposed in regard to compatibility between the insertion of the optical fiber and the mounting of means for preventing blocking of tuyere, particularly when the measurement is to be executed through a large number of tuyeres.

The present invention overcomes the above-described problems encountered in conventional hot melt temperature measuring methods which rely upon insertion of an optical fiber into the melt inside a furnace through a tuyere, by providing a highly reliable temperature measuring apparatus which can sequentially and continuously perform prevention of blockage of the tuyere and measurement of the melt temperature.

### DISCLOSURE OF THE INVENTION

The present invention provides in its one aspect a method of measuring the temperature of a method of measuring the temperature of a hot melt by inserting leading end of an optical fiber into the hot melt and converting a light signal transmitted through the optical fiber into temperature, characterized by comprising: repeatedly inserting the leading end of the optical fiber into the hot melt to repeat the temperature measuring operation, while severing by cutting devitrified leading end portion of the optical fiber so that the temperature measuring operation is repeated with fresh leading end portion of the optical fiber inserted into the hot melt.

The cutting of the leading end portion of the optical fiber may be executed at a suitable timing depending on the degree of devitrification. Thus, the severance of the devitrified leading end portion of the optical fiber may be executed when the optical fiber has been extracted from the hot melt after each insertion or after repetition of the insertion for several times.

In another form of the temperature measuring method of the present invention, the temperature of a hot melt is measured by inserting leading end of an optical fiber into the hot melt and converting a light signal transmitted through the optical fiber into temperature, characterized by comprising: excluding, from the measured temperature data, peak values of the measured temperature which appear when the optical fiber is inserted into the hot melt and when the optical fiber is extracted from the hot melt, so that the temperature is determined based upon the steady values obtained in the period between the moments at which the peak values are observed.

The exclusion of the peak values of the measured temperatures ensures high degree of accuracy of the measured results, without being affected by disturbance.

The present invention in its another aspect provides a method of controlling the temperature of a hot melt through measuring the temperature by inserting leading end of an optical fiber into the hot melt and converting a light signal transmitted through the optical fiber into temperature, characterized by comprising: controlling the temperature of the hot melt having a ferrite-type slag thereon to fall within a range of 1210 ± 10 °C, based on the results of temperature measurement which is conducted by repeating measuring operation at a predetermined time interval such that devitrified leading end portion of the optical fiber is severed by cutting so that fresh leading end portion of the optical fiber is inserted into the hot melt.

Thus, the temperature controlling method relies upon the foregoing temperature measuring method of the invention and may comprise a form in which the temperature measurement is conducted while severing by cutting any devitrified leading end portion during repetition of the insertion, so that the temperature measuring operation is conducted with fresh leading end portion inserted into the hot melt, as well as a form in which the temperature measurement is conducted by excluding, from the measured temperature data, peak values of the measured temperature which appear when the optical fiber is inserted into the hot melt and when the optical fiber is extracted from the hot melt, so that the temperature is determined based upon the steady values obtained in the period between the moments at which the peak values are observed.

According to this temperature controlling method, the temperature of the hot melt can be controlled to fall within a range which is lower than that in the conventional controlling method and which is as low as possible but high enough to sufficiently suppress precipitation of magnetite. It is therefore possible to suppress wear of the furnace materials due to dissolution, thus prolonging the life of the furnace materials. At the same time, the feed rate of coolants such as scrap copper, gold and silver sludges and so forth is enhanced, while maintaining sufficiently high fluidity of slag, whereby the operation can be performed efficiently and smoothly.

The present invention in its still another aspect provides an optical temperature measuring apparatus, characterized by comprising: an optical fiber to be inserted into a hot melt so as to transmit light radiated from the hot melt; fiber advancing/retracting means for advancing and retracting the optical fiber into and from the hot melt; guide means for guiding the optical fiber towards the hot melt; cutting means for cutting the leading end portion of the optical fiber extracted from the hot melt; and an optical temperature sensor for converting the light signal transmitted through the optical fiber into temperature.

This temperature measuring apparatus may comprise, in place of the guide means, extension means including extensible rod which is extensible towards the hot melt and contractible away from the hot melt so as to bring the leading end of the optical fiber into and out of the hot melt. The cutting means may include a cutter for cutting the leading end portion of the optical fiber extracted from the hot melt and a clamp means for clamping the end portion of the optical fiber extending outward from the end of the rod.

The extension means may include a cylinder means having the extensible rod. The apparatus also may comprise optical fiber receiving means which includes a truck connected to the rear end of the extensible rod, an optical fiber winding portion mounted on the truck and feeding means for unwinding and feeding the optical fiber, the cylinder means having a guide frame provided on the rear end of the cylinder means to extend in the longitudinal direction of the cylinder means, the truck as a unit with the extensible rod being movable along the guide frame, such that the optical fiber unwound from the winding portion on the truck extends through the extensible rod so as to project from the end of the rod.

The optical fiber feeding means may be constituted by pinch rollers and correcting rollers which remove any twist of the optical fiber. Preferably, the pinching pressure exerted by the pinch rollers is adjustable. It is also preferred that a guide tube is provided on the end of the extensible rod, for the purpose of preventing drooping of the optical fiber.

It is also preferred that the optical fiber cutting means is provided on the end of the extension means, and the cutter and the clamping means of the cutting means are arranged to oppose each other across the optical fiber, so as to be movable towards and away from the optical fiber.

The present invention in its further aspect provides an apparatus for measuring temperature inside a furnace through a tuyere. More specifically, in this aspect of the present invention, there is provided a temperature measuring apparatus for measuring the temperature of a hot melt by converting into temperature a light signal transmitted through an optical fiber the leading end of which is inserted into the hot melt in a furnace, characterized by comprising: (a) temperature measuring means for measuring the temperature of the hot melt through a tuyere of the furnace; and (b) punching means for breaking matters blocking the tuyere so as to unblock the tuyere; the temperature measuring means including the optical fiber having leading end portion to be inserted into the hot melt, an optical pyrometer for converting the light signal transmitted through the optical fiber into temperature, a guide tube for guiding the optical fiber to the tuyere, advancing/retracting means for moving the guide tube with the optical fiber extended therethrough into the tuyere, and optical fiber feeding means;
the pinching means including a punching rod for unblocking the tuyere and reciprocating means for reciprocately driving the punching rod.

In the temperature measuring apparatus set forth above, it is preferred that the optical fiber is extended through the guide tube, and that optical fiber receiving portion and the feeding means are mounted on the rear end of the guide tube. The temperature measuring apparatus may further comprise cutting means provided on the leading end of the guide tube, for severing by cutting devitrified leading end portion of the optical fiber.

The temperature measuring apparatus may further comprise a truck movable along an array of a plurality of the tuyeres, the truck carrying the temperature measuring means and the punching rod arranged side-by-side so as to be directed towards the tuyeres, so that a movement subsequent to unblocking of a tuyere performed by the punching rod brings the temperature measuring means into alignment with the unblocked tuyere, whereby unblocking of a blocked tuyere and temperature measurement through the unblocked tuyere are performed sequentially. The arrangement may be such that a plurality of the punching rods and the guide tube of the temperature measuring means are arranged side-by-side on the truck at a pitch which is equal to the pitch of the tuyeres or to a multiple of the pitch of the tuyeres.

### BRIEF DESCRIPTION OF THE DRAWINGS

Fig. 1 is an illustration of a concept of a temperature measuring system in accordance with the present invention;
Fig. 2 is a schematic sectional view of an end portion of an optical fiber used in the temperature measuring system of the invention;
Fig. 3 is a temperature-measurement chart showing results of temperature measurement conducted by using the temperature measuring system of the present invention;
Fig. 4 is a graph showing results of measurement performed with the use of the temperature measuring system of the present invention in comparison with those obtained through measurement conducted by using a consumable thermo-couple type measuring apparatus;
Fig. 5 is a graph showing rate of dissolution of magnesia into ferrite-type slag;
Fig. 6 is a partial phase diagram of a CaO-FeOₙ-Cu₂O system;
Fig. 7 is a schematic illustration of the whole structure of an optical temperature measuring apparatus in accordance with the present invention;
Fig. 8 is a fragmentary perspective view of the optical temperature measuring apparatus, showing particularly the construction for receiving an optical fiber;
Fig. 9 is a fragmentary view of the optical temperature measuring apparatus, showing particularly the construction of a cutting means provided on an end of the apparatus;
Fig. 10 is an illustration of operation of the cutting means;
Figs. 11(a) and 11(b) are illustrations of the optical temperature measuring apparatus in a state before the measurement and in a state during the measurement, respectively;
Fig. 12 is a schematic illustration of the whole temperature measuring apparatus in accordance with the present invention;
Fig. 13 is an illustration of a concept of temperature measuring means; and
Fig. 14 is an illustration of a concept of the cutting means incorporated in the temperature measuring apparatus.

### THE BEST MODE FOR CARRYING OUT THE INVENTION

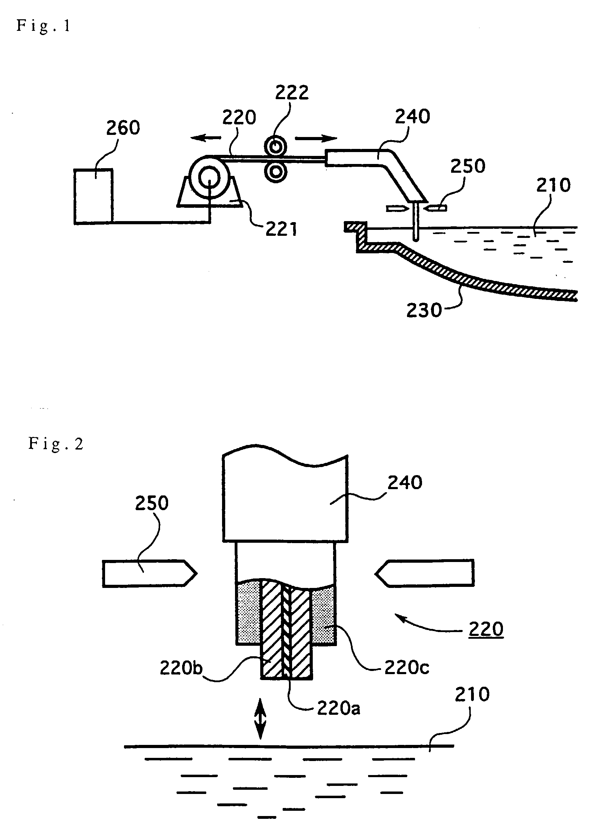

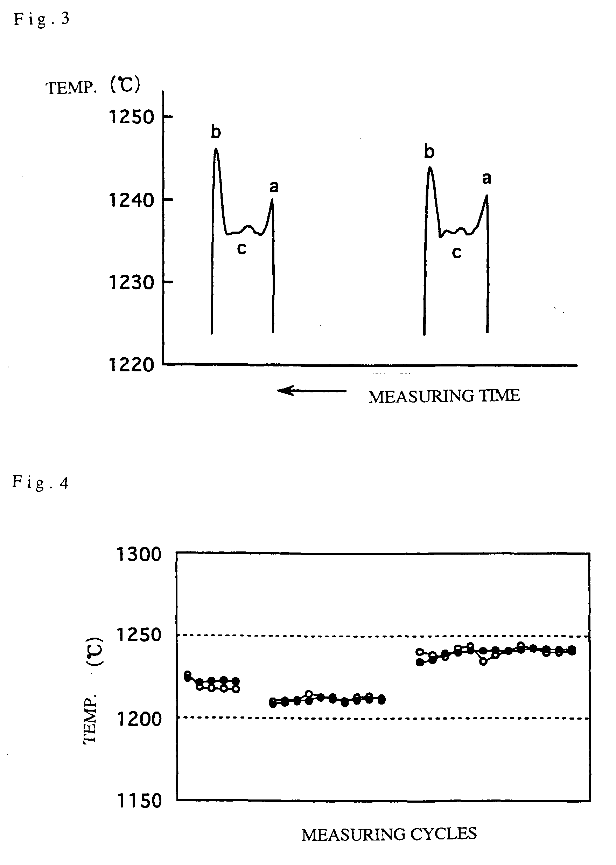

A detailed description will now be given of a hot melt temperature measuring method in accordance with the present invention, with reference to the accompanying drawings. Reference is made first to Fig. 1 which illustrates concepts of the measuring method and measuring apparatus of the present invention, Fig. 2 which is a schematic sectional view showing an end of a fiber and a guide member, and Fig. 3 which is a chart showing the results of temperature measurement performed in accordance with the present invention.

### Measuring Apparatus Structure-1

The measuring apparatus of the present invention as illustrated has an optical fiber 220 which is to be inserted at its one end into a molten metal of a high temperature, i.e., a hot melt, 210 so as to transmit light rays radiated from the hot melt 210. As shown in Fig. 2, the optical fiber 220 has a quartz core fiber composed of a core glass 220a and a clad 220b and a metal sheath 220c composed of a stainless steel tube of an extremely small thickness covering and reinforcing the core fiber. Thus, optical fibers commonly used for optical communication can be used as the optical fiber 220 employed in the present invention.

A predetermined length of the optical fiber 220 has been coiled on the bobbin 221. A guide means 240 for guiding the optical fiber 220 towards the melt surface in a melting furnace 230 is disposed above the surface of the hot melt 210 in the furnace 230. A pipe or trough-like member which can pass the optical fiber 220 therethrough may be used as the guide means 240. A shear 250 for shearing an end of the optical fiber is disposed in the vicinity of an exit of the guide means 240, i.e., the outlet of the guide means 240 through which the optical fiber is advanced towards the melt surface. The end of the optical fiber is reciprocatably threaded into the space between the shear blades of the shear 250.

A pair of pinch rollers 222 for feeding the optical fiber 220 forward towards the hot melt 210 and backward away from the hot melt 210 are disposed between the bobbin 221 and the guide means 240. Obviously, the pair of pinch rollers may be substituted by other suitable feeding means. It is also possible to connect a suitable driving means to the shaft of the bobbin 221 so that the bobbin is driven to feed the optical fiber 220 forward and backward.

To the rear end of the optical fiber 220 is connected an optical temperature sensor 260 which converts optical signal transmitted through the optical fiber into temperature. The temperature sensor 260 may be provided with a thermometer for indicating the temperature. A commercially available sensor may be used as the temperature sensor 260.

### Measuring Method-1

In order to measure the temperature of the hot melt 210 such as molten copper, the optical fiber 220 is fed forward by the operation of the pinch rollers 220 or of the shaft of the bobbin 221, so that the leading end of the optical fiber 220 is inserted into the hot melt 210. As a result, light rays from the hot melt are transmitted to the optical temperature sensor 260 through the optical fiber 220 which then converts the received light signal into temperature.

The end portion of the optical fiber inserted into the copper melt is progressively devitrified due to heat. After a certain period of measurement, therefore, the optical fiber 220 is fed backward and the portion of the optical fiber 220 which has been devitrified is severed by the shear 250. The optical fiber 220, now having a fresh end, is fed forward again so that the fresh end of the optical fiber is advanced into the hot melt 210, so that the measurement is started again. It is not necessary that the shearing is conducted after each measuring cycle. If the condition is such that the optical fiber is not significantly devitrified before several cycles of measurement, the shearing may be conducted after completion of such measuring cycles.

Thus, the leading end of the optical fiber is intermittently moved into and out of the hot melt. When the optical fiber is of the type which has a resin clad (UV coat) on the quartz core fiber and a resin coat on the metal sheath 220c, these resin coats are burnt to generate flame when the optical fiber is inserted into the hot metal melt. Consequently, a noticeable peak "a" appears in the temperature chart at the beginning of the measurement, as shown in Fig. 3. This flame can be reduced by using an optical fiber which is devoid of the resin coat on the metal sheath. However, since the resin coat on the quArtz core fiber cannot be dispensed with, it is impossible to completely eliminate generation of flame when the fiber is inserted into the hot melt. Generation of flame is also caused when the heated optical fiber is extracted from the hot melt and brought into contact with the ambient air, because the oxygen concentration is much higher in the ambient air than in the hot melt, so that a peak "b" similar to the peak "a" observed at the beginning of the measurement appears in the temperature chart at the end of the measurement.

The peak temperatures "a" and "b" thus observed when the optical fiber is brought into and out of the hot melt do not cause any problem when the measurement is conducted on melt iron which itself has high temperature. In case of a copper melt, however, the peak temperatures serve as noises or turbulence which cause large error, because the melt temperature is lower than such peak temperatures. According to the measuring method of the present invention, therefore, the peak temperatures "a" and "b" are excluded from the measurement results and the steady level "c" intermediate between these peaks is picked up as the measured temperature.

In the temperature measurement as described, the hot melt of uniform temperature is directly observed through the end surface of the optical fiber which has a sufficiently small area, so that conditions resembling those of so-called cavity radiation are realized. Consequently, the radiation can materially be regarded as being radiation from an ideal black body. It is therefore possible to obtain high accuracy of temperature measurement without requiring correction of emissivity which otherwise may be necessitated according to the type and nature of the hot melt. In addition, temperature measurement with satisfActorily high accuracy can be conducted in a short time of 2 to 3 seconds, due to quick response of the measuring system.

As will be understood from the foregoing description, according to the measuring method and apparatus of the present invention, the leading end of an optical fiber is intermittently brought into and out of a hot melt and any portion of the optical fiber which has become translucent or opaque is severed when the leading end has been moved out of the hot melt, before the optical fiber is put again into the measurement. In addition, the temperature measurement is conducted while excluding noise or disturbance which appear when the optical fiber is brought into and ut of the hot melt. It is therefore possible to achieve a high accuracy of the temperature measurement even for a metal melt of a temperature which is considerably lower than the melting pint of quartz, e.g., molten copper. More specifically, the temperature measuring method and apparatus of the present invention can suitably be used for the purpose of measuring temperature of a hot melt in a copper making furnace, containing copper, copper oxide and copper sulfide independently or in the form of a mixture, as well as other types of hot melts having similar temperatures, e.g., from 1000 to 1400 °C.

### Example-1

Temperatures of copper melt and slag melt in a crude copper trough of a continuous copper making furnace were measured by using the measuring system shown in Fig. 1. The optical fiber used had a quartz core fiber composed of a quartz fiber of 125 µm diameter and a resin coat of 125 µm thick, and a metal sheath of 1.2 mm diameter devoid of the resin coat. Operation was conducted cyclically, each cycle consisting in immersing approximately 3-cm leading end portion of the optical fiber in the crude copper melt for 5 seconds, pulling the leading end out of the crude copper melt, severing approximately 5-cm leading end of the optical fiber, and then immersing the fresh leading end of the optical fiber into the crude copper melt.

The results of the measurement are shown in Fig. 3. The temperature values as obtained in each cycle of measurement are shown in Fig. 4 in comparison with the results of measurement performed with the use of a consumable thermo-couple. In Fig. 4, white circles indicate the temperature values as obtained in accordance with the present invention, while black or solid circles show the results as obtained with the consumable thermo-couple.

From Fig. 4, it will be seen that the measurement results in accordance with the present invention well conform with those obtained with consumable thermo-couples, thus demonstrating high credibility. In addition, the temperature measuring method and apparatus in accordance with the present invention enables repeated use of the optical fiber, thus offering superior operability and economy over the conventional technique which relies upon the consumable thermo-couple.

As will be understood from the foregoing description, the temperature measuring method and apparatus of the present invention make it possible to continuously and accurately measure the temperature of a hot melt, even when the hot melt as is the case of a copper melt has a melt temperature considerably lower than the melting temperature of quartz. In addition, the measuring system in accordance with the present invention offers improved operability and economy.

A description will now be made as to a method of the present invention for controlling the temperature of a hot metal melt by using the temperature measuring method as described.

The controlling method of the present invention cyclically performs at a predetermined period or time interval the measurement of the temperature of a hot metal melt, each cycle consisting in inserting the leading end of an optical fiber into a hot meal melt so that light signal is transmitted through the optical fiber, and converting the light signal into temperature so as to continuously measure the temperature of the hot melt, so as to maintain the temperature of the hot metal melt having ferrite-type slag thereon within a range of 1210 ± 10 °C.

The term "ferrite-type slag" is used here to mean a slag containing iron oxide a typical example of which is calcium-ferrite slag (CaO-FeOₙ-Cu₂O) which is generated in a copper making furnace used in a continuous copper making process. The slag temperature has a dependency on the temperature of the hot metal melt and, therefore, is regarded as being the same as the hot melt temperature unless otherwise specified.

The present invention will be described in detail by making reference to a copper making furnace used in a continuous copper making process. During the operation of the furnace, iron in the matte is oxidized to form a slag which, in combination with the lime added as a flux, form a calcium-ferrite slag (CaO-FeOₙ-Cu₂O) containing iron oxide and lying on the surface of the copper melt (crude copper). This slag has a composition consisting of 17 to 13 wt% of lime (CaO), 13 to 17 wt% of copper oxide (Cu₂O) and the balance mainly iron oxide.

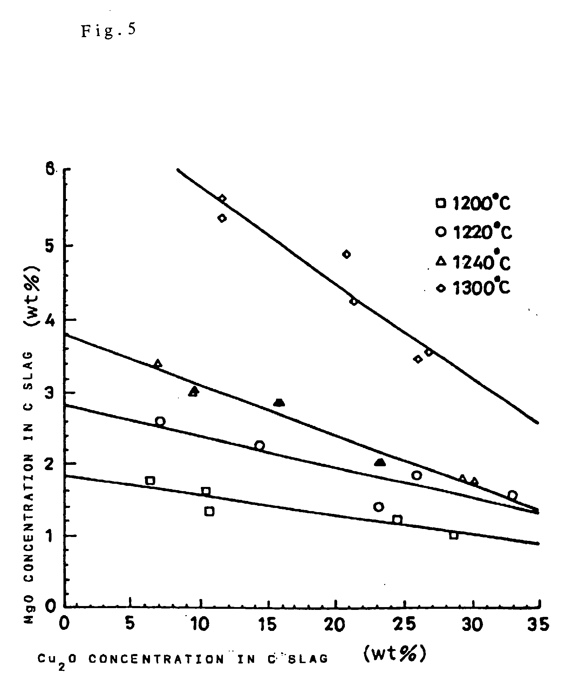

A study was made as to resistance of magnesia refractory to corrosion in this calcium-ferrite slag to obtain the results as shown in Fig. 5. As illustrated in Fig. 5, the rate of dissolution of magnesia in this type of slag varies according to the slag temperature and the copper concentration in the slag. In particular, the slag temperature is a dominant factor. More specifically, while the magnesia concentration in the slag is about 5.2 wt% at the slag temperature of 1300 °C (1573 K), the magnesia concentration at the slag temperature of 1200 °C (1473 K) is about 1.5 wt% which is as small as about 1/3 that at 1200 °C. It is therefore understood that, by controlling the slag temperature at and around 1200 °C, it is possible to remarkably suppress dissolution of the magnesia, thus offering extended life of the refractories.

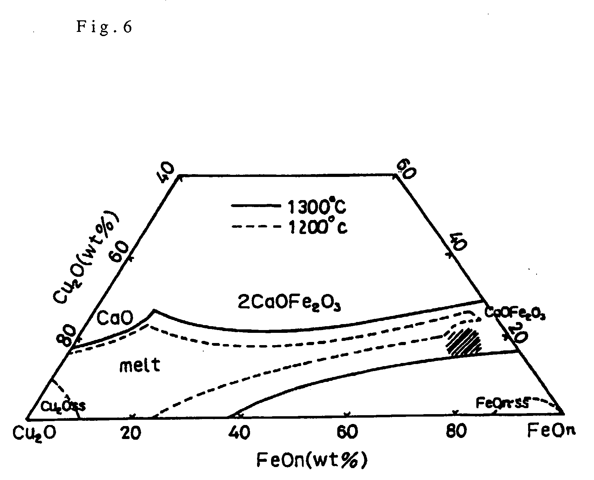

Referring to Fig. 6 which shows a tertiary phase diagram of the above-mentioned calcium-ferrite slag, composed mainly of copper oxide, iron oxide and lime, the composition falling within the range of the above-mentioned slag, shown as a hatched area in the diagram, exhibits liquid state when the slag temperature is 1300 °C. However, when the slag temperature is lowered, precipitation of magnetite (FeOₙ) becomes noticeable so that the solid-phase region is expanded. Thus, the magnetite content increases so as to enhance the viscosity of the slag, as the slag temperature comes down. When the slag temperature falls down below 1200 °C, the liquid phase extinguishes so that most part of the iron component in the slag is changed into solid phase, causing a drastic increase in the viscosity. Consequently, fluidity of the slag is lost so as to cause deposition of the solid slag in and around the discharge port of the furnace or in the discharge trough, causing a problem of blockage of such a port or trough.

Thus, the lower limit of the temperature in the described continuous copper making process, which is the threshold for maintaining fluidity of the slag, is set to approximately 1200 °C. According to the invention, therefore, a control is executed so as to maintain the hot melt temperature which is above but as close as possible to this lower limit temperature. More particularly, taking into account the possible temperature variation, the control command temperature is set to 1210 °C and the control is performed with a tolerance of ± 10 °C. Consequently, the hot melt temperature is controlled to fall within the range of from 1200 °C to 1220 °C, so that the furnace can be operated at a temperature which is from 10 °C to 30 °C lower than that realized by the conventional control method in which the command temperature is set to 1230 °C or above.

Consequently, the rate of dissolution of the magnesia refractory is reduced almost to a half, as will be understood from a comparison between the dissolution rate at temperature range of 1220 °C to 1240 °C and that at temperature range of 1200 °C to 1220 °C in Fig. 5.

### Example-2

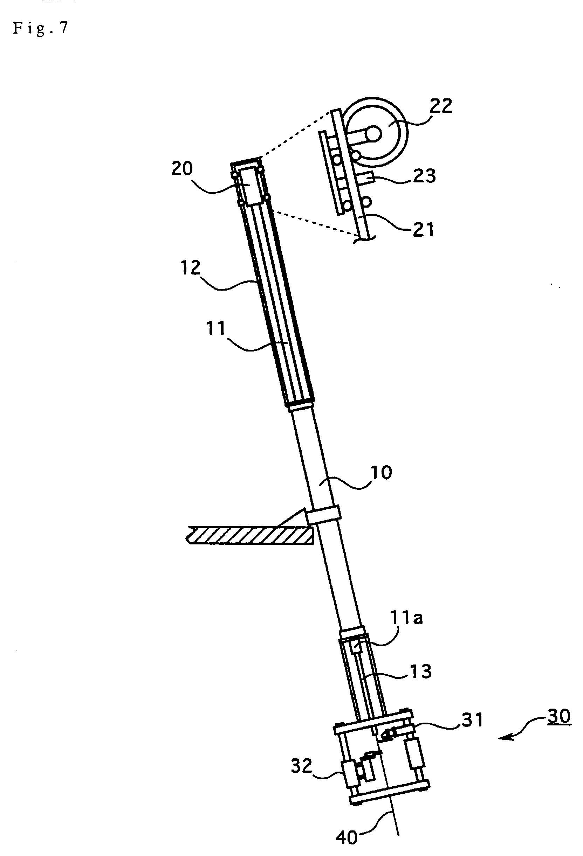

A continuous copper making process was conducted by using a copper making furnace (C furnace) while setting the command temperature for the control of crude copper melt temperature to 1210 ± 10 °C. The measurement of the temperature of the copper melt was conducted at a 10-minute interval, by using an optical temperature measuring apparatus as shown in Fig. 7. The control of the copper melt temperature was conducted by charging a suitable amount of coolant (C-furnace slag, anode residue, copper scrap) when the melt temperature exceeds the command temperature, or by reducing the rate of supply of the matte into the copper making furnace, so as to lower the melt temperature, whereas, when the copper melt temperature is below the control command temperature, by reducing the rate of charging of the coolant or increasing the rate of supply of the matte, so as to enhance the calorific value, thereby maintaining the copper melt temperature within the range of from 1200 °C to 1220 °C.

As a consequence, the slag maintained low viscosity and, hence, high fluidity, without exhibiting deposition of the solid slag in and around the furnace discharge port and discharge trough. In addition, the feed rate of the coolant increased 0.8 ton per hour as compared with a comparative example.

### Comparative Example-1

The same copper making furnace as that employed in Examples was used and operated while the copper melt temperature was measured at 1-hour interval by using a conventional thermo-couple of consumable type. Since it was clear from the results of Example-1 that the temperature measurement at 1-hour interval inevitably allows a large melt temperature variation of 30 °C or greater, the control command temperature was set to 1230 °C so that the hot melt temperature does not come down below 1200 °C at the lowest, for the sake of safety of the operation.

The copper melt temperature when deviating from the control command temperature was adjusted by the same method as that in Example-1. In this case, however, the copper melt temperature varied to fluctuate within the range of from approximately 1200 °C to 1260 °C.

In this example of operation, the feed rate of the coolant was smaller than that in Example-1. The rate of dissolution of the furnace material (MgO refractory) into the slag in this example was about 1.5 times as large that in Example-1, thus proving shorter life of the furnace. Although the fluidity of the slag was not unacceptably low, a tendency was observed that slag of high viscosity is discharged to deposit to the trough. An analysis of the deposited slag showed that the slag was mainly composed of magnetite, suggesting that the slag temperature had happened to come down below 1200 °C.

According to the temperature controlling method of the invention as described, the temperature of the metal melt in the furnace holding ferrite-type slag is controlled to be as close as possible to the lower limit temperature above which sufficient fluidity of the slag is maintained. Consequently, the operation can be performed at temperatures considerably lower than those realized under conventional temperature control method. As a consequence, the thermal load acting on the surface is reduced, as well as damage of the furnace material caused by the slag, whereby the life of the surface material is extended. In addition, the operation efficiency is improved because the feed rate of the coolant charged into the melt is increased.

A detailed description will now be given of an optical temperature measuring apparatus which is suitable for use in the hot melt temperature measuring and controlling methods, with reference to the accompanying drawings.

Fig. 7 schematically shows the whole structure of the optical temperature measuring apparatus in accordance with the present invention. A portion of the apparatus for receiving an optical fiber is shown by an annexed enlarged schematic fragmentary view.

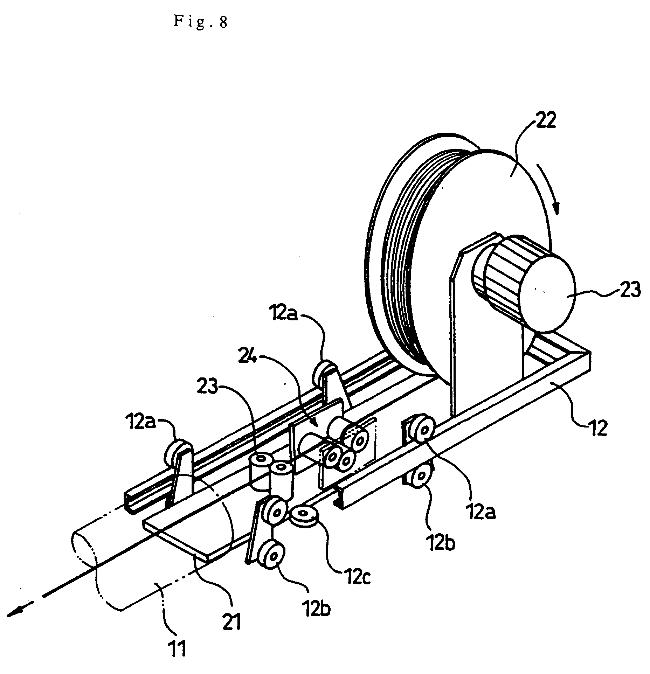

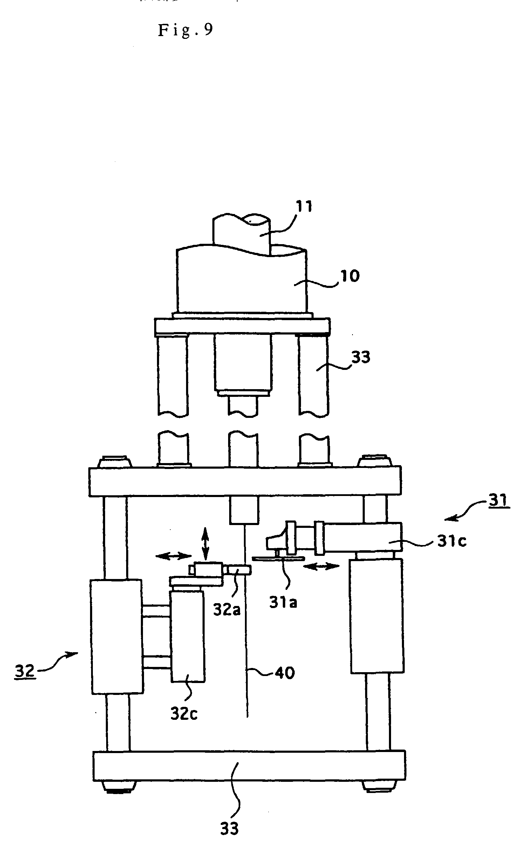

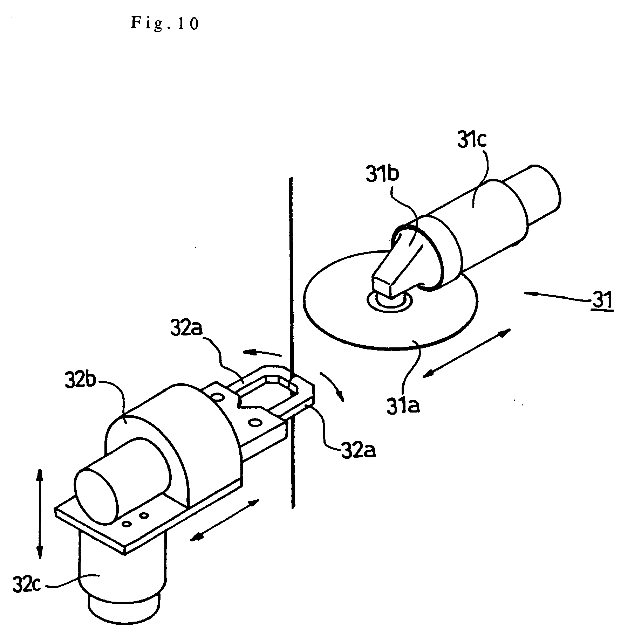

Fig. 8 is a fragmentary perspective view of the optical fiber receiving portion of the apparatus, Fig. 9 is a fragmentary view showing cutting means provided on one end of the apparatus, Fig. 10 is an illustration of operation of the cutting means, and Figs, 11(a) and 11(b) are illustrations of different states of operation of the apparatus.

### Apparatus Structure-2

The optical temperature measuring apparatus of the present invention employs an optical fiber which is adapted to be inserted at its leading end into a hot melt so that light signal generated as a result of heat radiation is transmitted through the optical fiber to an optical temperature sensor which then converts the light signal into temperature, thereby measuring the temperature of the hot meal melt. To this end, the apparatus has an extension means 10 with an extensible rod 11, an optical fiber receiving means 20 movable unitarily with the extensible rod 11 of the extension means 10, and an optical fiber cutting means 30 provided on an end of the extension means 10.

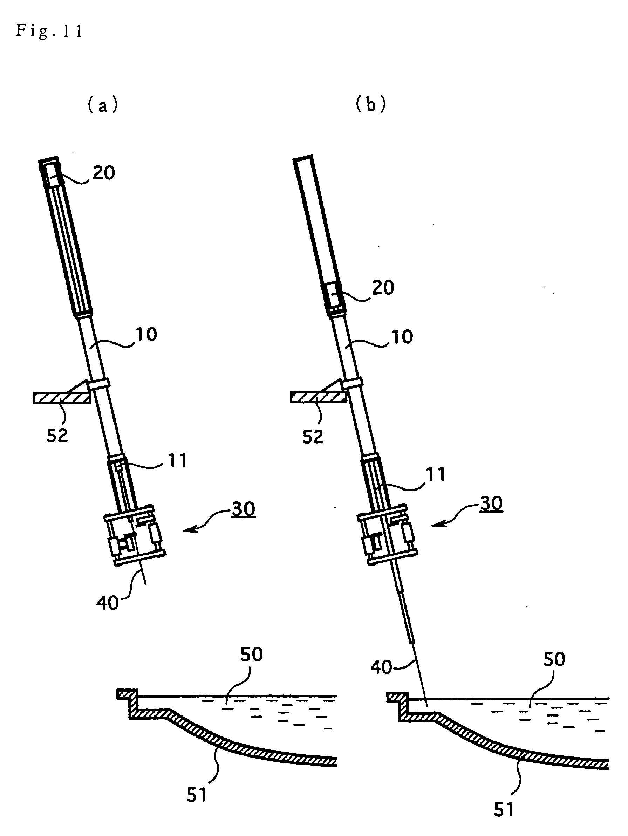

Preferred forms of the extension means 10 are shown in Figs. 7 and 11. As will be seen from these Figures, the extension means 10 is constituted by a cylinder means having the extensible rod 11. A guide frame 12 is formed on the rear end of the cylinder means integrally therewith, so as to extend in the longitudinal direction of the cylinder means. The guide frame 12 slidably carries a truck 21 which is connected to the rear end of the extensible rod 11, so that the truck 21 reciprocately moves on and along the guide frame 12 as a unit with the extensible rod 11.

The truck 21 has a winding portion on which an optical fiber 40 is wound and feeding means 22 which unwinds and feeds the optical fiber 40. The optical fiber receiving means 20 is constituted by the truck 21, and the winding portion 22 and the feeding means 23 which are carried by the truck 21. The optical fiber 40 unwound and extracted from the winding portion 22 of the truck 21 extends through the extensible rod 11 so as to project from an end 11a of the extensible rod 11.

A practical form of the optical fiber receiving means 20 is shown in Fig. 8. As shown in this Figure, the truck 21 is provided at its each side with rollers 12a and 12b which make rolling contact with the upper and lower surfaces of the guide frame 12 and rollers 12c which make rolling contact with the inner surface of the guide frame 12. The truck 21 is slidably held by the guide frame 12 through these rollers 12a, 12b and 12c. A bobbin 22 for winding the optical fiber 40 thereon is provided on the rear end of the truck 21. The bobbin 22 incorporates an optical temperature sensor 23 which converts the radiated light transmitted through the optical fiber 40 into temperature.

The truck 21 further has a pair of pinch rollers which constitute the feeding means 23 for feeding the optical fiber 40. A correcting roller device 24 for removing any twist of the optical fiber 40 is arranged between the pinch rollers 23 and the bobbin 22. In the illustrated arrangement, the correcting roller device 24 has three rollers which are held in rolling contact with one another. The optical fiber 40 unwound from the bobbin 22 is made to pass through a path formed by these rollers so as to be wound over parts of these rollers and is pinched by the nip between the pinch rollers 23 so as to be pulled by the pinch rollers 23. The optical fiber 40 is then advanced through the hollow of the extensible rod 11 so as to be projected from the end 11a of the rod. The length of the optical fiber 40 over which the optical fiber 40 is pulled and fed is adjusted in accordance with the length at which the optical fiber 40 is shorn at its leading end. Preferably, the pinching pressure exerted by the pinch rollers 23 is adjustable in accordance with, for example, the diameter of the optical fiber. A too low pinching pressure allows the pinch rollers 23 to slip on the optical fiber 40, whereas a too high pinching pressure may deform the optical fiber so as to impair transmission of the light.

It is also preferred to provide a guide tube 13 on the end 11a of the extensible rod 11, as shown in Figs. 7 and 9, in order to prevent drooping of the optical fiber. The guide tube 13 extends in the longitudinal direction of the extensible rod 11, so that the optical fiber 40 extends through this guide tube 13 so as to project from the outer end of this guide tube 13. The cutting means 30 is provided on the end of the extension means opposite to the optical fiber receiving means 20.

The cutting means 30 includes a cutter 31 for severing a leading end portion of the optical fiber 40 and a clamping means 32 which clamps the optical fiber 40. Preferably, the cutting means 30 is constructed as a unit with the extension means 10. A preferred form of the cutting means 30 is shown in Figs. 9 and 10. As will be seen from these Figures, a grid-like framework 33 is fixed to the end of the cylinder constituting the extension means 10. A cutter 31 and a clamping means 32 are mounted on the framework 33. The cutter 31 and the clamping means 32 are disposed so as to oppose each other across the optical fiber 40 and are movable towards and away from the optical fiber 40. The clamping means 32 is reciprocatable in the longitudinal direction of the optical fiber 40. The cutter 31 also may be reciprocatable in the longitudinal direction of the optical fiber 40 but this movement is not essential.

The cutter 31 has a rotary blade 31a, a motor 31b for driving the rotary blade 31a and a cylinder means 31c which serves to reciprocately move the rotary blade 31a and the motor 31b as a unit towards and away from the optical fiber 40. The cylinder means 31 is carried by the framework 33, and the rotary blade 31a together with the driving motor 31b is mounted on an end of the cylinder means 31c, such that the edge of the rotary blade 31a is directed to the optical fiber 40. The cylinder means 31c may be provided so as to be movable up and down on the framework 33.

The clamping means 32 includes a pair of fingers 32a which are movable towards and away from each other so as to clamp and unclamp the optical fiber 40, cylinder means 32b for reciprocately moving the fingers 32a towards and away from the optical fiber 40, and a cylinder means 32c which vertically drives the fingers 32a and the cylinder means 32b as a unit along the optical fiber 40.

Cutting of the leading end portion of the optical fiber is conducted as follows. The extension rod 11 is retracted so that the leading end extremity of the optical fiber is raised to a position near the guide tube 13 on the end of the extensible rod. Then, the clamping means 32 is moved upward towards the guide tube 13. The clamping means 32, with the fingers 32a still kept away from each other, is then moved towards the optical fiber 40 and then the fingers are operated to loosely clamp the optical fiber. Subsequently, the clamping means 32 clamping the optical fiber 40 is moved downward to a cutting position, and the cutter 31 is advanced from the stand-by position, so that the optical fiber is cut, thereby severing the leading end portion of the optical fiber. After the cutting, the cutter 31 is retracted to the stand-by position, and the fingers 32a of the clamping means 32 are moved apart to release the optical fiber. The whole clamping means 32 is then moved back and stationed for the next cycle of the cutting operation.

The above-described sequence of operations of the cutter 31 and the clamping means 32 is only illustrative, and may be changed as required provided that the optical fiber is clamped by the clamping means so as to be stably held when cut by the cutter 31.

The optical fiber shown in Fig. 2, commonly used in optical communications, may be used as the optical fiber 40.

In general, a smelting furnace is provided with heating burners arranged around the furnace so as to heat the metal melt thereby preventing cooling of the metal melt. There is a fear that the flame from the heating burners near the optical temperature measuring apparatus may cause an error in the temperature measurement. It is therefore preferred to employ such an automatic control circuit that extinguishes the burner flame when the temperature measurement is to be performed and ignites the burner after the temperature measurement is finished.

### Measuring method (Operation)

Preferably, the optical temperature measuring apparatus is fixed to a supporting frame 52 at one side of the melting furnace 51 such that it is directed to the metal melt 50 at a slight inclination as shown in Fig. 11 so as not to hamper the melting operation.

In order to measure the temperature of the hot melt 50 such as molten copper, the extension means 10 is operated to lower the extensible rod 11 so as to insert the leading end portion of the optical fiber 40 into the hot melt 50. The light radiated from the hot melt is made to be incident to the optical fiber 40 from the end extremity of the same and is transmitted through the optical fiber 40 to the optical temperature sensor. The optical temperature sensor detects the temperature based on the luminance of the radiated light. The time length over which the optical fiber is immersed in the hot metal may be as short as 2 to 3 seconds.

After the extensible rod 11 is raised, the leading end portion of the optical fiber is raised and brought out of the hot melt 50. If the leading end portion of the optical fiber 40 has been devitrified, such a devitrified portion is severed by the cutting means 30. When the hot melt is a copper melt, the optical fiber usually can stand several cycles of temperature measurement without being devitrified, so that the cutting may be done after such cycles, although the invention does not exclude execution of cutting after each cycle of temperature measurement. The length of the leading end portion to be severed by cutting depends on the length of the devitrified portion of the optical fiber, but generally ranges from about 5 cm to about 7 cm.

After the cutting of the leading end portion of the optical fiber, the pinch rollers 13 are operated to feed the optical fiber 40 forward by a length corresponding to the length of the severed portion, and the extensible rod 11 is further extended downward so as to insert the leading end of the optical fiber 40 into the hot melt 50 so as to perform the subsequent cycles of the temperature measurement.

Thus, the temperature measurement is conducted by intermittently inserting and extracting the leading end portion of the optical fiber into and from the hot melt. As described before, the resin coat (UV coat) of the optical fiber is burnt to generate flame when the optical fiber is inserted into the hot melt, so that a peak temperature, which is different from the temperature of the hot melt as the measuring object, appears in the beginning part of the record of the measured temperature. In addition, when the leading end portion of the optical fiber is extracted from the melt, vigorous burning takes place immediately after the heated portion of the optical fiber is brought into contact with the ambient air, because the oxygen concentration is much higher in the ambient air than in the hot melt. Consequently, a notable peak temperature similar to that observed in the beginning of the measurement is recorded in the chart which records the results of the temperature measurement. It is therefore recommended to exclude these peak temperatures observed when the optical fiber is inserted into and extracted from the hot melt so that the temperature data intermediate between these peak temperatures alone is picked up as the measured temperature, thus eliminating any error which otherwise may be caused by the inclusions of these peak temperatures. The influence of the peak temperatures is more serious and, hence, the error is enhanced when the optical fiber has a resin coat on the metallic sheath. It is therefore preferred to use an optical fiber which is devoid of a resin coat on the metallic sheath.

The optical temperature measuring apparatus of the present invention s described has means for intermittently inserting the leading end portion of the optical fiber into the hot melt, and has a function to severe, when the optical fiber has been extracted from the hot melt, the leading end portion of the optical fiber if the leading end portion has been devitrified. With this apparatus, therefore, it is possible to accurately and continuously measure the melt temperature even for such metal melts that have temperatures considerably lower than the melting temperature of quartz. In addition, since the fiber receiving portion of the optical fiber is moved as a unit with the extensible rod, the leading end portion of the optical fiber can be inserted into the hot melt with minimal length of feed from the fiber receiving portion. In addition, inconveniences such as slackening of the optical fiber upon extraction of the fiber from the hot melt can be avoided.

In the arrangement in which the optical fiber receiving portion is mounted on the truck connected to the rear end of the extensible rod, the optical fiber receiving portion and the extensible rod can smoothly move as a unit with each other, thus offering improved operability. In addition, since the optical fiber is extended through the hollow of the extensible rod so as to project from the end of the rod, the extension means and the fiber receiving portion can be constructed in the form of a compact unit, while enabling the extension means to serve as a protective case for protecting the extended portion of the optical fiber.

The cutting means has a clamping means and a cutter so that the cutting of the optical fiber can be performed stably while the optical fiber is held by the clamping means. A structure in which the clamping means and the cutter of the cutting means are integrated with the extension means offers superior operability, because no readjustment of the cutting position is necessitated even when the orientation of the whole apparatus is changed. When the arrangement is such that the clamp means and the cutter are movable towards and away from the optical fiber and the clamping means clamps the optical fiber at a position near the end of the guide tube and then moves to the cutting position, it is possible to precisely hold the optical fiber at a position near the end of the guide tube during the cutting, despite any drooping of the leading end portion of the optical fiber.

A further reduction in size of the whole apparatus can be achieved by incorporating the optical temperature sensor in the optical fiber winding portion. Provision of the correcting rollers in the optical fiber receiving portion and provision of the guide tube on the end of the extensible rod serve to eliminate any twist, flexure and drooping of the optical fiber, contributing to further improvement in the operability.

It is possible to achieve a further improvement in the measuring accuracy by using an optical fiber which does not have any resin coat on the metallic sheath, and by employing a control circuit which automatically turns off heating burners around the optical temperature measuring apparatus in advance of the start of the temperature measurement and then reignites the burners after completion of the temperature measurement, because the use of such an optical fiber and control circuit eliminates any error in the measurement which otherwise be caused by the influence of the flame generated when the resin coat is burnt and the flame on these heating burners.

A detailed description will now be given of a temperature measuring apparatus of the present invention which measures the temperature inside the furnace through a tuyere.

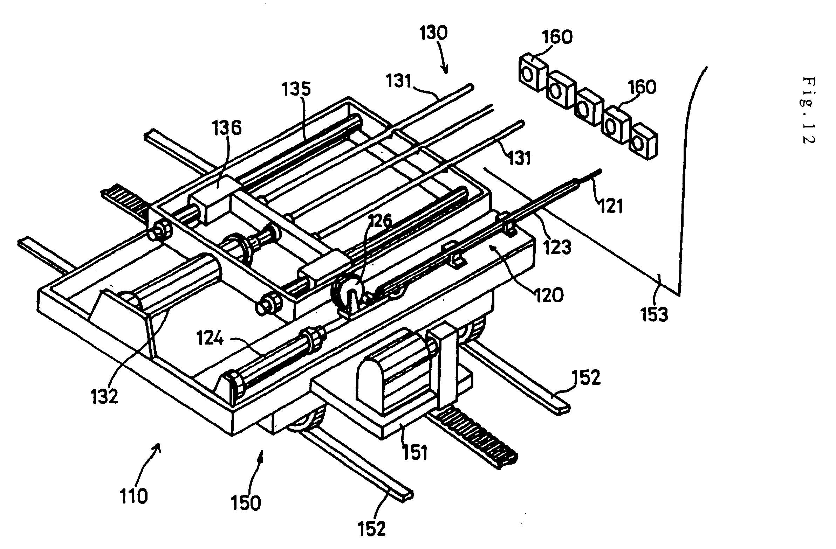

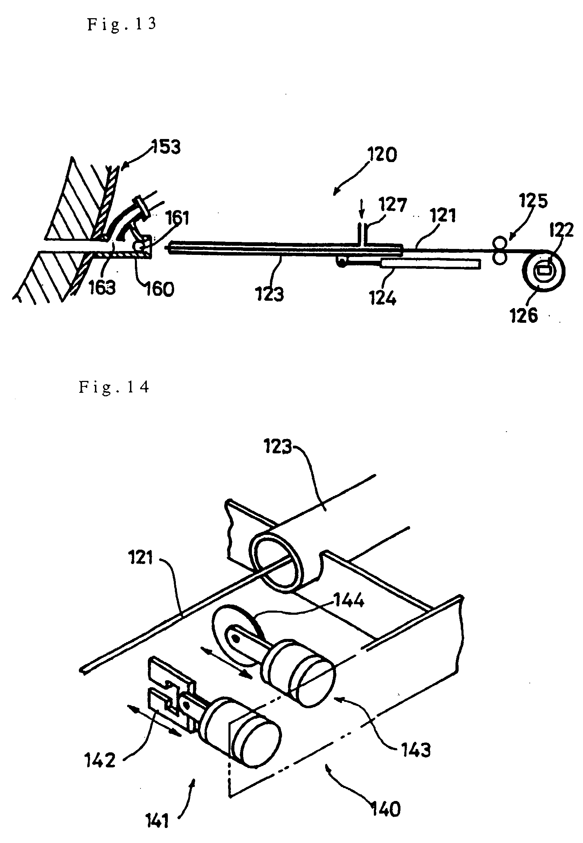

Fig. 12 is a schematic illustration of the whole structure of a temperature measuring apparatus in accordance with the present invention, Fig. 13 is an illustration of a concept of temperature measuring means, and Fig. 14 is an illustration of a concept of cutting means incorporated in the temperature measuring apparatus.

### Apparatus Structure-3

The temperature measuring apparatus 110 embodying the present invention has a temperature measuring means 120 which measures the temperature of a hot melt in a smelting furnace, through a tuyere 160 of the smelting furnace, and a punching means 130 for preventing the tuyere 160 from being blocked. In the description in this specification, the term "smelting furnace" is used to generally mean various types of furnaces having tuyeres and used for smelting of various kinds of metals, such as converters, refining furnaces, melt-refining furnaces, separation furnaces, copper making furnaces, blast furnaces and so forth.

Preferably, each tuyere is provided with a sealing means for sealing the tuyere after extraction of the temperature measuring means and punching means. By way of example, Fig. 13 shows a ball-type sealing member 161. The sealing member 161 is adapted to be pushed up into a space above the through bore 163 of the tuyere when the temperature measuring apparatus or the punching means is inserted into the tuyere, but is allowed to fall into through-bore 163 so as to seal the tuyere to prevent the melt from leaking, when the temperature measuring means or the punching means is extracted from the tuyere.

The temperature measuring means 120 has an optical fiber 121 adapted to be inserted at its leading end portion into a hot metal melt, an optical pyrometer 122 which receives light signal transmitted through the optical fiber 121 and converts the light signal into temperature, a guide tube 123 for guiding the optical fiber 121 into the tuyere 160, advancing/retracting means 124 for advancing retracting the guide tube 123 into and from the tuyere 160, a feeding means 125 for feeding the optical fiber 121, and a gas introduction tube 127 which introduce a purging gas to purge the interior of the guide tube when the temperature measurement is conducted.

The guide tube 123 confronts the tuyere 160 of the furnace, and is adapted to be moved into and out of the tuyere 160. In the illustrated embodiment, a cylinder means is used as the advancing/retracting means 124. The cylinder means has a rod which is connected at its leading end to a rear portion of the guide tube 123. The optical fiber 121 for the temperature measurement extends through the guide tube 123 which is adapted to be moved into and out of the tuyere 160 by the operation of the cylinder means 124. During the measuring, a pressurized gas is introduced into the guide tube from the gas introduction tube 127 so as to prevent invasion of air into the furnace when the guide tube 123 is inserted into the tuyere and so s to prevent the hot melt inside the furnace from coming into the guide tube.

A bobbin 126 for winding the optical fiber thereon is disposed behind the guide tube 123. The bobbin 126 incorporates an optical pyrometer 122. The optical fiber 121 is wound on the bobbin 126 and is connected to the optical pyrometer 122. Pinch rollers 125 serving as the feeding means are disposed at the fiber outlet of the bobbin 126. The bobbin 126 and the pinch rollers 125 in combination form an optical fiber receiving portion which is preferably formed on the rear end of the guide tube 123 integrally therewith as shown in Fig. 12. After the guide tube 123 in which the optical fiber is extended is inserted into the tuyere 160, the optical fiber 121 is fed forward by the pinch rollers 125, so that the leading end portion of the optical fiber 121 is inserted into the hot melt in the furnace.

It is also preferred to employ a cutting means provided on the end of the guide tube 123, for severing a devitrified end portion of the optical fiber. As shown in Fig. 14, the cutting means 140 includes a clamp 141 for clamping the optical fiber 121 and a cutter 143 for severing the leading end portion of the clamped optical fiber 121. The clamp 141 is provided with fingers 142 which are adapted to be moved towards and away from each other so as to clamp and unclamp the optical fiber 121, while the cutter 143 has a cutting blade 144. Although a rotary cutter blade is used as the cutting blade 144 in the illustrated embodiment, the invention does not exclude the use of other types of cutter such as shear blades.

The clamp 141 and the cutter 143 are reciprocately movable towards and away from the optical fiber 121, and are normally stationed at stand-by positions so as not to hamper the reciprocatory movement of the guide tube 123. After the guide tube 123 is retracted from the tuyere and reset to a stand-by position, the clamp 141 is moved forward so as to clamp the end portion of the optical fiber 121 projecting from the end of the guide tube 123. Then, the cutter 143 is moved forward to cut the clamped end portion of the optical fiber. After the cutting, the clamp 141 and the cutter 143 are retracted to the stand-by positions.

The punching means 130 has a punching rod 131 for breaking blocking matter in the tuyere and reciprocating means 132 for reciprocately driving the punching rod 131. The punching rod 131 is disposed reciprocatably so as to oppose the tuyere 160, and a cylinder means serving as the reciprocating means 132 is provided on the rear end of the punching rod 131. More specifically, the cylinder means 132 has a rod which is connected at its end to the punching rod 131, so that the punching rod 131 is reciprocately moved into and out of the tuyere in accordance with extension and retraction of the cylinder rod.

More specifically, in the illustrated embodiment, there are provided a pair of guides 135 extending in the direction of the reciprocating motion of the punching rod 131, and a slider 136 slidable along the guides 135. A plurality of punching rods, 3 in the illustrated case, are mounted on the slider 136 integrally therewith. The cylinder rod is connected at its end to the slider 136. These punching rods 131 are adapted to be inserted into the respective tuyeres 160 as a result of operation of the cylinder means, thereby breaking matters such as slag solidified in the tuyeres so as to prevent these tuyeres from being blocked. The punching rods 131 are then retracted by the return stroking of the cylinder means 132 so as to be stationed at a stand-by position.

Preferably, the temperature measuring means and the punching means are mounted integrally on a truck which moves along the tuyeres of the smelting furnace. More specifically, as shown in Fig. 12, a truck 150 is arranged to run along the array of tuyeres. The truck 150 carries the guide tube 123 of the temperature measuring means and the punching rods 131 and the reciprocating means for driving the punching rods. Although not exclusive, the arrangement may be such that the truck 150 runs on rails 152 laid along the smelting furnace 153 by power of a motor 151 which also is carried by the truck 150.

The guide tube 123 and the punching rods 131 carried by the truck 150 are arranged side-by-side along the array of the tuyeres, preferably at a pitch which is equal to the pitch of the tuyeres or a multiple of the tuyere pitch. Such an arrangement enables simultaneous insertion of a plurality of punching rods into corresponding tuyeres so that blocking matters are broken at once in a plurality of tuyeres. It is also possible to insert, simultaneously with the unblocking performed by the punching rods, the guide tube 123 into a tuyere which has been unblocked, so that the temperature measuring operation can be executed concurrently with the unblocking operation.

Thus, unblocking and temperature measurement can be executed sequentially and consecutively for a plurality of tuyeres, by virtue the structural feature in which the temperature measuring means and the punching rod are integrally mounted on the truck.

### Operation of Apparatus

In order to carry out the temperature measurement, the truck 150 is stopped at a position where it confronts tuyeres to be used for the temperature measurement. After the punching rods 131 are aligned with tuyeres, the cylinder means 132 is operated so that the punching rods 131 are driven into the tuyeres at once, so that matters inside the tuyeres such as the slag depositing to the tuyere opening inside the furnace is broken so as to unblock the tuyeres. After the unblocking, the cylinder means 132 is reversed so that the punching rods 131 are retracted to the stand-by position.

Subsequently, the truck 150 is driven to bring the punching rods 131 to positions of the next group of tuyeres adjacent to the tuyeres which have been unblocked. Since the punching rods 131 and the guide tube 123 are arranged at the same pitch as the tuyeres, the guide tube 123 is brought into alignment with a tuyere which has been unblocked, when the punching rods have been moved into alignment with the next group of tuyeres to be unblocked. After such an alignment has been achieved, the cylinder means is operated so that the punching rods 131 and the guide tube 123 are driven into corresponding tuyeres, whereby unblocking of a plurality of tuyeres and temperature measurement through an unblocked tuyere are conducted simultaneously.

As the guide tube 123 of the temperature measuring means 120 is inserted into the unblocked tuyere to such a depth that the leading end of the guide tube 123 projects into the furnace, the optical fiber 121 extended through the guide tube 123 is fed by the pinch rollers 125, so that the leading end of the optical fiber is inserted into the metal melt in the furnace. During execution of the temperature measurement, a pressurized gas is introduced into the guide tube 123 through the gas introduction tube 127, so as to prevent the metal melt in the furnace from flowing into the guide tube. The light radiated from the metal melt is picked up by and transmitted through the optical fiber 121 to the optical pyrometer 122, whereby the temperature is determined based on the luminance of the light. The length of time over which the optical fiber is kept in the melt may be as short as 2 to 3 seconds.

After completion of the temperature measurement, the guide tube 123 is extracted from the tuyere by the cylinder means 124 so as to be returned to and stationed at the stand-by position. When the leading end portion of the optical fiber has been devitrified, the devitrified portion is severed by the cutting means. More specifically, the clamp 141 advances towards the end portion of the optical fiber projecting from the guide tube 123 so as to clamp this end portion of the optical fiber. Then, the cutter 143 is moved forward to cut the clamped end portion of the optical fiber. After the cutting, the clamp 141 and the cutter 143 are retracted to the stand-by positions. When the melt is a copper melt, the cutting is usually conducted after 4 to 5 cycles of the measuring operation. Thus, the timing at which the cutting is to be executed may be determined suitably. The length of the end portion to be severed by cutting depends on the length of the devitrified portion of the optical fiber but generally ranges from about 5 cm to about 7 cm.

When the guide tube 123 or the punching rod 131 is extracted from the tuyere, the ball-type sealing member 161 which has been pushed to an upper space inside the tuyere drops to close an seal the tuyere. In order to prevent the end portion of the optical fiber from being damaged by the dropping sealing member 161, the arrangement and operation may be such that the exposed end of the optical fiber is retracted into the guide tube after completion of the temperature measurement and then the guide tube in which the optical fiber is concealed is extracted from the tuyere 160.

Simultaneously with the extraction of the guide tube 123, the punching rods 131 are extracted and returned to the stand-by positions. The truck 150 is then moved to bring the punching rods 131 and the guide tube 123 into alignment with the next group of tuyeres to be unblocked and the unblocked tuyere through which the temperature measurement is to be executed, followed by repetition of the described operation.

According to the temperature measuring apparatus of the present invention as described, it is possible to execute the temperature measurement in the course of execution of the unblocking of tuyeres, because the tuyere unblocking means are arranged to enable such a concurrent operation. Consequently, protective maintenance of tuyeres and measurement of the temperature inside the furnace are efficiently performed in a short time.

In the described embodiment, a truck adapted to run along the array of tuyeres caries the temperature measuring means and a plurality of punching rods. This arrangement permits simultaneous unblocking of a plurality of tuyeres, and allows the guide tube of the temperature measuring means to be inserted into an unblocked tuyere, thus enabling the unblocking operation and the temperature measuring operation to be executed sequentially.

The temperature measuring means used in the temperature measuring apparatus employs an optical fiber the leading end of which is inserted into the melt so as to measure the temperature directly. It is therefore possible to accurately measure the temperature without being influenced by waving and foaming of the melt surface, floating or foreign matters, and change in emissivity which would affect the measuring accuracy in the conventional measuring technique relying upon radiation pyrometer which observes radiated light. In addition, temperature measurement can be performed with high accuracy even for the measuring object which causes devitrification of quartz fiber, such as molten copper, by virtue of the cutting means which is provided on the temperature measuring means and which severs devitrified portion of the optical fiber.

### Industrial Applicability

The temperature measuring method in accordance with the present invention which employs the step of severing devitrified fiber end portion to enable consecutive measurement, as well as the temperature measuring method of the invention which employs the step of excluding disturbance of peaks of measured value, enables the measurement to be executed continuously and accurately, even when the measurement is conducted on a melt of a temperature considerably lower than that of the melting point of quartz fiber, e.g., a copper melt. These methods are also superior both in operability and economy. These methods, therefore, can suitably used in the measurement of temperatures of such types of melts.

The melt temperature controlling method of the present invention, which relies upon the described temperature measuring method, effectively reduces the thermal load imposed on the furnace materials, thus extending the life of the furnace materials, while enhancing the feed rate of the coolants which are charged into the melt, thus contributing to improvement n the operation efficiency and economy of metal smelting process.

The optical temperature measuring apparatus of the present invention is capable of performing continuous and accurate measurement of hot melt and, hence, can be broadly used in metal smelting processes. The temperature measuring apparatus, when arranged to measure the temperature through tuyeres, is capable of performing the temperature measurement without causing blocking of the tuyeres, thus offering high level of reliability of temperature measurement when applied to such a type of furnaces.

## Claims

1. A method of measuring the temperature of a hot melt by inserting leading end of an optical fiber into the hot melt and converting a light signal transmitted through said optical fiber into temperature,
characterized by comprising: repeatedly inserting the leading end of said optical fiber into said hot melt to repeat the temperature measuring operation, while severing by cutting devitrified leading end portion of said optical fiber so that the temperature measuring operation is repeated with fresh leading end portion of the optical fiber inserted into said hot melt.

2. A method according to Claim 1, wherein the severance of the devitrified leading end portion of said optical fiber is executed after repetition of insertion of said optical fiber for several times.

3. A method of measuring the temperature of a hot melt by inserting leading end of an optical fiber into the hot melt and converting a light signal transmitted through said optical fiber into temperature,
characterized by comprising: excluding, from the measured temperature data, peak values of the measured temperature which appear when said optical fiber is inserted into said hot melt and when said optical fiber is extracted from said hot melt, so that the temperature is determined based upon the steady values obtained in the period between the moments at which said peak values are observed.

4. A method of controlling the temperature of a hot melt through measuring the temperature by inserting leading end of an optical fiber into the hot melt and converting a light signal transmitted through said optical fiber into temperature, characterized by comprising: controlling the temperature of said hot melt having a ferrite-type slag thereon to fall within a range of 1210 ± 10 °C, based on the results of temperature measurement which is conducted by repeating measuring operation at a predetermined time interval such that devitrified leading end portion of said optical fiber is severed by cutting so that fresh leading end portion of said optical fiber is inserted into said hot melt.

5. A method according to Claim 4, wherein the temperature measurement is conducted by excluding, from the measured temperature data, peak values of the measured temperature which appear when said optical fiber is inserted into said hot melt and when said optical fiber is extracted from said hot melt, so that the temperature is determined based upon the steady values obtained in the period between the moments at which said peak values are observed.

6. An optical temperature measuring apparatus, characterized by comprising: an optical fiber to be inserted into a hot melt so as to transmit light radiated from said hot melt; fiber advancing/retracting means for advancing and retracting said optical fiber into and from said hot melt; guide means for guiding said optical fiber towards said hot melt; cutting means for cutting the leading end portion of said optical fiber extracted from said hot melt; and an optical temperature sensor for converting the light signal transmitted through said optical fiber into temperature.

7. An optical temperature measuring apparatus according to Claim 6 for measuring the temperature of a hot melt by converting into temperature a light signal transmitted through an optical fiber the leading end of which is inserted into said hot melt, characterized by comprising:
(a) optical temperature sensor for converting the light radiated from said hot melt into temperature;
(b) extension means including extensible rod which is extensible towards said hot melt and contractible away from said hot melt so as to bring the leading end of said optical fiber into and out of said hot melt;
(c) optical fiber receiving means movable as a unit with said extensible rod; and
(d) optical fiber cutting means provided on the end of said extension means and including a cutter for cutting the leading end portion of said optical fiber extracted from said hot melt and a clamp means for clamping the end portion of said optical fiber extending outward from the end of said rod.

8. An optical temperature measuring apparatus according to Claim 7, wherein said extension means includes a cylinder means having said extensible rod, and said optical fiber receiving means includes a truck connected to the rear end of said extensible rod, an optical fiber winding portion mounted on said truck and feeding means for unwinding and feeding said optical fiber, said cylinder means having a guide frame provided on the rear end thereof to extend in the longitudinal direction of said cylinder means, said truck as a unit with said extensible rod being movable along said guide frame, such that said optical fiber unwound from said winding portion on said truck extends through said extensible rod so as to project from the end of said rod.

9. An optical temperature measuring apparatus according to Claim 8, further comprising: an optical temperature sensor incorporated in said optical fiber winding portion on said truck; correcting rollers provided on said truck together with pinch rollers constituting said optical fiber feeding means, for removing twisting of said optical fiber; and a guide tube provided on the end of said extensible rod, for preventing drooping of said optical fiber therefrom.

10. An optical temperature measuring apparatus according to Claim 9, wherein the pinching pressure exerted by said pinch rollers is adjustable.

11. An optical temperature measuring apparatus according to Claim 7, wherein said optical fiber has a metallic sheath which is not coated with any resin coat.

12. An optical temperature measuring apparatus according to Claim 7, wherein said optical fiber cutting means is provided on the end of said extension means, and said cutter and said clamping means of said cutting means are arranged to oppose each other across said optical fiber, so as to be movable towards and away from said optical fiber.

13. An optical temperature measuring apparatus according to Claim 12, wherein said clamping means is reciprocately movable in the directions of extension and retraction of said extensible rod.

14. A temperature measuring apparatus for measuring the temperature of a hot melt by converting into temperature a light signal transmitted through an optical fiber the leading end of which is inserted into said hot melt in a furnace, characterized by comprising:
(a) temperature measuring means for measuring the temperature of said hot melt through a tuyere of said furnace;
and
(b) punching means for breaking matters blocking said tuyere so as to unblock said tuyere;
said temperature measuring means including said optical fiber having leading end portion to be inserted into said hot melt, an optical pyrometer for converting the light signal transmitted through said optical fiber into temperature, a guide tube for guiding said optical fiber to said tuyere, advancing/retracting means for moving said guide tube with said optical fiber extended therethrough into said tuyere, and optical fiber feeding means;
said pinching means including a punching rod for unblocking said tuyere and reciprocating means for reciprocately driving said punching rod.

15. A temperature measuring apparatus according to Claim 14, wherein said optical fiber is extended through said guide tube, and wherein said optical fiber receiving portion and said feeding means are mounted on the rear end of said guide tube, whereby said temperature measuring means is constructed unitarily.

16. A temperature measuring apparatus according to Claim 14, further comprising cutting means provided on the leading end of said guide tube, for severing by cutting devitrified leading end portion of said optical fiber.

17. A temperature measuring apparatus according to Claim 14, further comprising a truck movable along an array of a plurality of said tuyeres, said truck carrying said temperature measuring means and said punching rod arranged side-by-side so as to be directed towards said tuyeres, so that a movement subsequent to unblocking of a tuyere performed by said punching rod brings said temperature measuring means into alignment with the unblocked tuyere, whereby unblocking of a blocked tuyere and temperature measurement through the unblocked tuyere are performed sequentially.

18. A temperature measuring apparatus according to Claim 17, wherein a plurality of said punching rods and said guide tube of said temperature measuring means are arranged side-by-side on said truck at a pitch which is equal to the pitch of said tuyeres or to a multiple of the pitch of said tuyeres.
